# FASCICULE DE BREVET EUROPEEN

(11) **EP 2 307 587 B1**
(45) Date de publication et mention de la délivrance du brevet: **21.06.2017**
(21) Numéro de dépôt: 09772751.5
(22) Date de dépôt: 03.07.2009
(51) Int. Cl.: C22C 47/04, C22C 47/20, F16C 7/02

(54) **PROCÉDÉ DE FABRICATION D'UNE PIÈCE MÉTALLIQUE RENFORCÉE DE FIBRES CÉRAMIQUES**
VERFAHREN ZUR HERSTELLUNG EINES DURCH KERAMIKFASERN VERSTÄRKTEN METALLTEILS
METHOD FOR PRODUCING A METALLIC PART REINFORCED BY CERAMIC FIBRES

(30) Priorité: 04.07.2008 FR 0854590
(43) Date de publication de la demande: 13.04.2011
(73) Titulaire: Safran Landing Systems, 78140 Vélizy-Villacoublay (FR)
(72) Inventeur: DUNLEAVY, Patrick, F-91120 Palaiseau (FR); MASSON, Richard, F-78530 Buc (FR)
(74) Mandataire: Gevers & Orès
(86) Numéro de dépôt international: PCT/FR2009/051307
(87) Numéro de publication internationale: WO 2010/001069

(56) Documents cités:
- EP-A- 1 726 677
- US-A1- 2007 020 134

## Description

La présente invention concerne la fabrication de pièces métalliques comportant des renforts internes formés de fibres céramiques et obtenues à partir de l'incorporation d'un insert fibreux dans une matrice métallique.

Dans le but de réduire la masse des pièces métalliques tout en leur assurant une plus grande résistance notamment en traction et/ou en compression, il est connu d'incorporer de manière pertinente des fibres céramiques dans la masse. Il s'agit par exemple de fibres de carbure de silicium, SiC, qui présentent une résistance à la traction et à la compression largement supérieure à celle d'un métal comme le titane.

La fabrication de ces pièces passe par la formation préalable d'inserts à partir de fils céramiques enduits de métal. Ils sont désignés aussi fibres CMM ou fils enduits. Le métal procure notamment l'élasticité et la souplesse nécessaires à leur manipulation.

Un procédé connu de fabrication de telles pièces avec renfort tel que décrit dans la demande de brevet EP-A-1726677 comprend la réalisation d'un bobinage de fils enduits autour d'un mandrin. Le bobinage est ensuite incorporé dans un conteneur ou corps principal métallique dans lequel on a usiné au préalable une rainure formant le logement pour l'insert. La profondeur de la rainure est supérieure à la hauteur du bobinage. Un couvercle est placé sur le conteneur et soudé à sa périphérie. Le couvercle présente un tenon de forme complémentaire à celle de la rainure, et sa hauteur est adaptée à celle du bobinage placé dans la rainure de façon à venir combler la rainure. On procède ensuite à une étape de compaction isostatique à chaud au cours de laquelle le couvercle est déformé et le bobinage est comprimé par le tenon. La surface du conteneur le long du bord de la rainure est inclinée en forme de pan coupé pour assurer une déformation progressive du couvercle pendant la phase de compaction.

La technique de compaction isostatique à chaud consiste à disposer la pièce à traiter dans une enceinte où elle est soumise à une pression élevée, de l'ordre de 1000 bars, et à une température également élevée, de l'ordre de 1000°C, pendant quelques heures.

Au cours de ce traitement les gaines métalliques des fils enduits se soudent entre elles et avec les parois de la rainure, par soudage diffusion, pour former un ensemble dense composé d'un alliage métallique au sein duquel s'étendent les fibres céramiques. La pièce obtenue est ensuite usinée à la forme souhaitée.

Le procédé permet la fabrication de pièces aéronautiques axisymétriques, telles que des disques de rotor ou des disques aubagés monoblocs mais aussi non axisymétriques, telles que des bielles, des arbres, des corps de vérin, des carters.

L'usinage de la rainure dans le corps principal est une opération difficile à réaliser notamment en raison des faibles rayons de raccordement dans le fond de la rainure entre la surface du fond et les parois latérales. Ce faible rayon de raccordement est nécessaire pour permettre le logement avec un jeu aussi faible que possible, de l'insert qui a une section rectangulaire et qui est formé de fils de faibles rayons. L'usinage du tenon correspondant dans le couvercle n'est pas aisé non plus à cause des angles non débouchant et du fait qu'il doit avoir une forme parfaitement complémentaire à la rainure.

La demanderesse a développé un procédé de fabrication de pièces de forme allongée et incorporant un insert avec des parties rectilignes contribuant à la transmission des efforts de traction et/ou de compression unidirectionnels. Ce procédé est décrit dans la demande de brevet FR07/05453 du 26 juillet 2007. La demanderesse a également développé un procédé de fabrication d'un insert rectiligne. Il consiste à réaliser une ébauche d'insert en forme de bobine, à compacter celle-ci dans un conteneur par compaction isostatique à chaud puis à usiner les inserts rectilignes dans le conteneur compacté. Un tel procédé est décrit dans la demande de brevet FR 07/05454 du 26 juillet 2007.

Cependant lorsque les pièces à réaliser ne sont pas axisymétriques mais sont de forme oblongue, ovale ou bien avec des portions rectilignes, un ajustement précis sur des longueurs importantes est difficile à obtenir. Cela est rendu encore plus difficile pour des inserts formés de fils enduits très rigides, en raison des fibres céramiques qui obligent la réalisation de logements dans lequel ils s'adaptent parfaitement. Le couvercle doit s'assembler parfaitement dans la rainure afin de ne pas laisser échapper des fibres.

Au lieu de fabriquer l'insert séparément puis de le transférer dans la rainure du corps principal, le brevet FR 2886290 au nom de Snecma propose de réaliser, selon une variante, le bobinage directement sur le corps principal. Au lieu d'une rainure on ménage deux épaulements dans celui-ci. Le premier présente une surface d'appui pour le bobinage direct d'un fil enduit. Cette surface est parallèle à la direction de bobinage. Lorsque le bobinage est achevé, on reconstitue la rainure en plaçant une pièce sur le corps principal qui est de forme complémentaire à celle d'un second épaulement formant un gradin par rapport au premier épaulement. Puis on dispose le couvercle avec le tenon sur l'insert que l'on vient de bobiner et on procède au compactage de l'ensemble. Cette solution ne résout que partiellement le problème de fabrication car l'assemblage reste complexe.

La demande de brevet FR0709171 au nom de la demanderesse précise que le logement de l'insert dans le corps métallique a la forme d'une encoche à section en L, le couvercle présentant une encoche interne à section en L et de forme complémentaire à celle du corps métallique avec ledit insert. En outre le couvercle est conformé extérieurement de façon que les efforts de pression s'exercent perpendiculairement aux faces de l'encoche.

Ainsi les techniques actuelles de fabrication permettent-elles de créer des pièces métalliques comportant un ou plusieurs renforts en composites à matrice métallique à partir de bobinage de fibres enduites et d'un conteneur - corps et couvercle. Ces structures sont performantes mais ont un coût de fabrication élevé. En particulier l'usinage du corps principal du conteneur avec son couvercle représente une fraction importante du coût total des pièces.

La demanderesse s'est fixé comme objectif d'améliorer le procédé de fabrication de pièces de forme allongée dans le sens d'une simplification des étapes de la gamme et d'une réduction des coûts.

On parvient à réaliser cet objectif selon l'invention par un procédé de fabrication d'une pièce métallique renforcée de fibres céramiques, selon lequel :
- on usine, dans un corps métallique présentant une face supérieure, au moins un logement pour un insert,
- on dispose au moins un insert formé des fibres céramiques enduites de métal dans le logement,
- on recouvre l'insert d'un couvercle,
- on met sous vide l'espace interstitiel autour de l'insert et on ferme ledit espace sous vide de manière hermétique,
- on traite l'ensemble du corps métallique avec couvercle par compaction isostatique à chaud et
- on usine ledit ensemble traité pour obtenir ladite pièce.

Le procédé est caractérisé par le fait que le couvercle comprend un élément recouvrant l'insert dans la rainure et étant en saillie par rapport à la face supérieure du corps métallique, et une feuille recouvrant la face supérieure avec ledit élément.

En divisant le couvercle en un élément recouvrant l'insert dans la rainure et en une feuille séparée dudit élément, on simplifie nettement la fabrication de cette pièce. La fonction de l'élément recouvrant l'insert dans la rainure est d'agir comme un piston et la feuille de permettre la fermeture hermétique de l'ensemble. En outre, en assurant que ledit élément soit en saillie pour permettre un rattrapage de la réduction de volume résultant de la densification de l'insert pendant la phase de compaction isostatique à chaud, on simplifie l'usinage de la rainure du corps métallique.

Le document US 2007/020134 A1 décrit un procédé selon lequel on recouvre l'insert d'un couvercle, cependant l'invention diffère de ce procédé en ce que le couvercle comprend un élément en saillie et une feuille recouvrant la face supérieure du corps métallique avec ledit élément.

L'insert peut être de forme allongée par exemple de forme annulaire oblongue avec une ou des portions rectilignes. De préférence l'insert est rectiligne, par exemple il a la forme d'un bloc rectiligne, et le logement de l'insert dans le corps métallique présente une rainure rectiligne de forme correspondante. L'élément recouvrant l'insert dans la rainure est alors en forme de pavé.

Selon un mode de réalisation dans le cas où l'insert a la forme d'un bloc rectiligne, la rainure présente une première partie de logement de l'insert et au moins une deuxième partie en prolongement de la première partie, l'élément en forme de pavé comprenant une branche centrale recouvrant l'insert et un prolongement de forme correspondant à la deuxième partie de la rainure. Cet élément du couvercle forme ainsi un pavé métallique de géométrie simple et facilement réalisable.

De préférence, l'élément en forme de pavé comprend une zone de déformation progressive entre la branche centrale et le prolongement. Cette zone de déformation progressive évite la fissuration du couvercle au moment de l'étape de compaction.

L'insert est à section transversale polygonale, notamment rectangulaire, ovale ou circulaire.

De préférence l'insert est formé de fibres enduites de métal assemblées en faisceau, ce qui réduit les opérations de préparation.

Avantageusement l'espace entourant l'insert est fermé hermétiquement par un cordon de soudure entre la feuille de métal et le corps métallique.

La solution de l'invention présente un intérêt particulier avec la mise en place, par exemple de deux inserts par face, de forme allongée notamment rectiligne, agencés selon deux branches parallèles ou non. Selon la technique antérieure, pour obtenir deux renforts internes longitudinaux, on réalise au préalable un insert de forme annulaire avec deux branches rectilignes reliées entre elles par deux parties en arc de cercle. Ensuite on usine le logement en fonction de la forme précise de l'insert. Ajuster la forme du logement à celle de l'insert s'est révélé être une opération très délicate et onéreuse. Ainsi en supprimant l'arrondi on rend l'usinage et la mise en place plus simples sans sacrifier à la résistance de la pièce au final puisque les fibres travaillent essentiellement selon leur direction longitudinale dans la section centrale de la pièce.

On décrit maintenant un mode de réalisation non limitatif de l'invention, plus en détail, en référence aux dessins annexés sur lesquels :
- la figure 1 montre les différentes étapes 1a, 1b, 1c, 1d de fabrication d'une pièce de forme allongée selon l'art antérieur connu du présent déposant;
- la figure 2 montre un exemple de pièce obtenue après usinage d'un conteneur incorporant des inserts ;
- la figure 3 montre en perspective un corps métallique avec une rainure usinée conformément à l'invention et la mise en place de l'insert et du pavé formant une partie du couvercle ;
- la figure 4 montre en perspective et par transparence, le corps métallique rainuré, l'insert fibreux et le pavé du couvercle en place ;
- la figure 5 montre en coupe le pavé et la feuille formant ensemble le couvercle sur l'insert et le corps métallique.

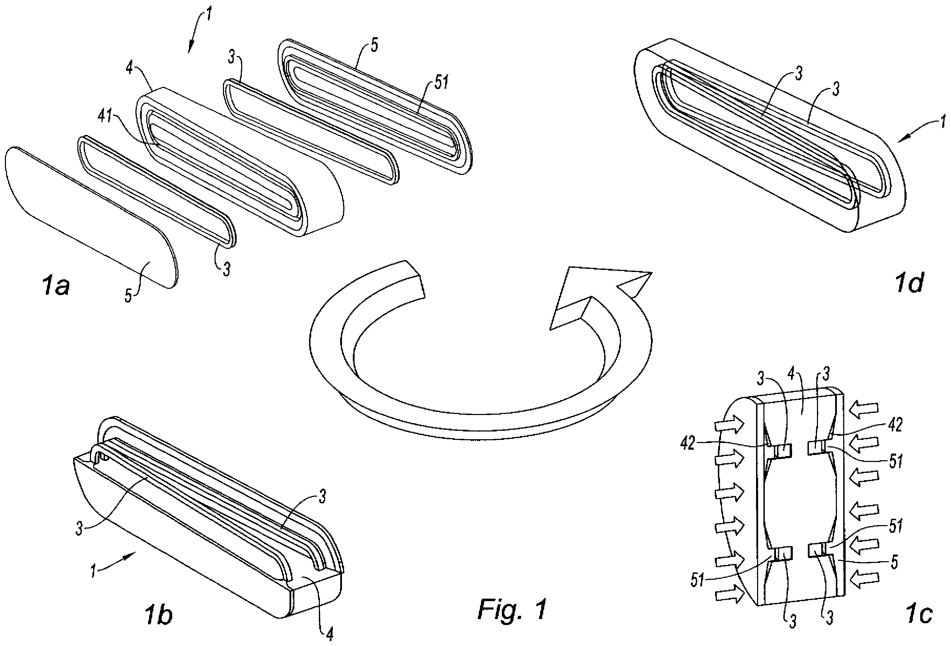

Sur la figure 1, extraite de la demande de brevet FR 07/05453, on voit un conteneur 1 avec un corps principal 4 de forme allongée, destiné à former une bielle d'un train d'atterrissage par exemple. On a usiné une rainure 41 sur chacune des deux faces du corps 4. Cette rainure permet le logement d'un insert 3 qui comprend deux portions rectilignes parallèles ou non entre elles réunies aux extrémités par une portion en arc de cercle. Les inserts sont du type à fibres céramiques enduites de métal tel que le titane. Les rainures et les inserts sont de formes complémentaires de manière à ce que l'insert soit ajusté sans jeu dans la rainure ou avec un jeu minimal. Deux couvercles 5 sont pourvus d'une partie en saillie formant tenon 51 et viennent recouvrir les faces du corps 4. Le tenon vient en appui sur l'insert logé dans la rainure et colmate cette dernière. On soude, par exemple par faisceau d'électron, le couvercle 5 au corps 4 en assurant le vide à l'intérieur du conteneur.

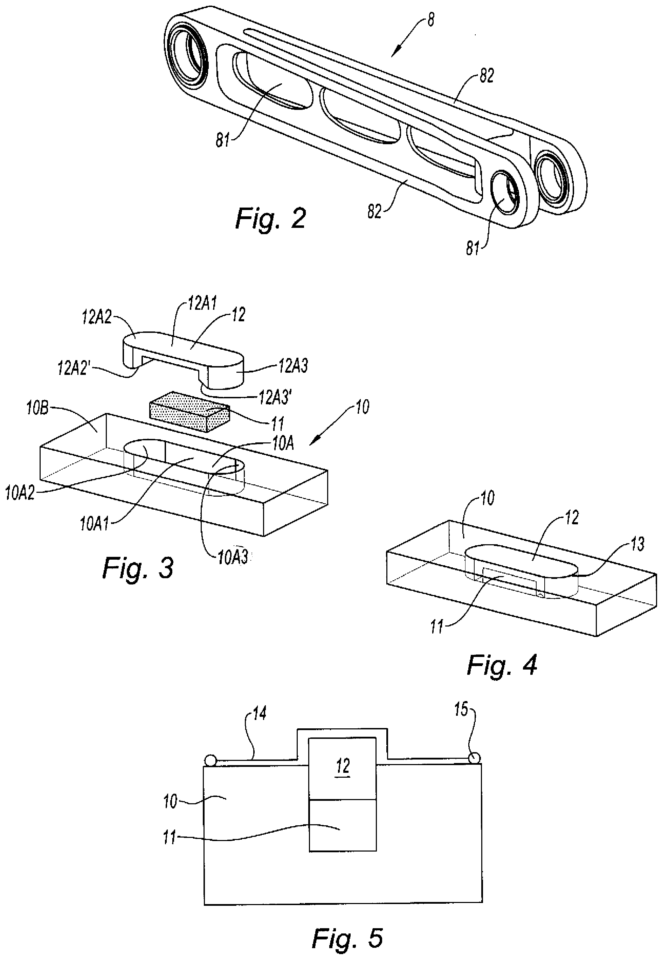

Cet assemblage a pour but d'éviter que les fibres, qui ont un très faible diamètre, de l'ordre de 0,25 mm, ne puissent se déplacer ou s'échapper lors de la compaction isostatique à chaud et de permettre la compaction. Le conteneur est visible sur la figure 1b ; il est en partie arraché pour montrer les inserts. Le conteneur est ensuite disposé dans une enceinte pour subir un traitement de compaction isostatique à chaud. La coupe transversale du conteneur de la figure 1c montre que les bords 42 de la rainure 41 sont chanfreinés de manière à ménager un jeu avec la partie du couvercle 5 adjacente au tenon 51. Lors de l'opération de compaction isostatique à chaud, la pression est exercée selon la direction perpendiculaire à la surface du couvercle générant l'affaissement des couvercles. La pression et la chaleur, de l'ordre de 1000°C et 1000 bars permettent au métal d'occuper les vides entre les fils enduits constituant l'insert. Le volume de l'insert diminue d'environ 23%. Le tenon est ainsi déplacé vers le bas et le jeu de part et d'autre du tenon est absorbé. À la fin du processus, le métal a fusionné et le conteneur s'est compacté; la pièce est ainsi renforcée par les fils emprisonnés dans la masse. La figure 1d représente l'ébauche de pièce obtenue avec deux inserts visibles en transparence. L'ébauche est ensuite usinée de manière à obtenir la pièce 8 représentée sur la figure 2. Cette pièce 8 présente des évidements 81 entre les branches 82. Les fibres céramiques sont incorporées dans les branches 82 qui assurent la transmission des efforts en traction et compression. Les inserts utilisés sont de forme annulaire mais comme cela l'a été décrit dans la demande de brevet FR 07/05454 ils peuvent être formés d'éléments rectilignes en barreaux. Dans ce dernier cas les éléments rectilignes sont incorporés dans le conteneur après avoir été auparavant compactés.

La solution de l'invention permet d'obtenir de telles pièces de façon plus économique.

En se reportant sur la figure 3, on voit un corps métallique 10 de forme allongée avec, par rapport à la figure, une face supérieure 10B. On a usiné une rainure rectiligne 10A dont le fond est plat et les parois perpendiculaires au fond ; la surface de raccordement entre le fond et les parois présente un faible rayon de courbure pour permettre un ajustement de l'insert avec un jeu aussi faible que possible. La rainure comporte une partie centrale 10A1 et deux parties d'extrémité 10A2 et 10A3 dans le prolongement longitudinal de celle ci. Les parties d'extrémité sont arrondies. La rainure sert de logement à un insert en forme de bloc rectiligne 11, formé d'un assemblage de fibres céramiques enduites et de longueur 1 inférieure ou égale à la longueur de la partie centrale 10A1 de la rainure. L'insert forme un faisceau de fibres s'ajustant dans la partie centrale 10A1 de la rainure. Un élément en forme de pavé 12 recouvre l'insert 11 disposé dans le logement que constitue la rainure. L'élément en forme de pavé 12 a la même forme et les mêmes dimensions, au jeu près, permettant sa mise en place dans la rainure sur l'insert, lorsqu'il est vu de dessus que la rainure 10A. Il comprend une partie centrale 12A1 recouvrant l'insert et deux parties d'extrémité, 12A2 et 12A3 dans le prolongement longitudinal de la partie centrale de part et d'autre de cette dernière.

L'épaisseur des deux parties d'extrémité correspond à l'épaisseur de la partie centrale plus celle de l'insert placé dans la rainure et est légèrement supérieure à la profondeur de la rainure. L'élément 12 s'appuie sur le fond de la rainure par les deux parties d'extrémité 12A2 et 12A3. On observe que les parties d'extrémité présentent chacun un pan coupé 12A2' et 12A3' ménageant un espace avec le fond de la rainure du côté de l'insert. L'élément en forme de pavé est en saillie par rapport à la surface 10B. Une feuille métallique 14, le même métal que celui du corps métallique, un alliage de titane notamment, est posée sur la face supérieure du corps métallique et soudée en périphérie pour assurer le vide et permettre la compaction isostatique à chaud. La feuille est conformée de façon à s'adapter à la forme de l'élément 12 en saillie. Elle comporte ainsi une cavité 14' dont la forme correspond à la partie en saillie de l'élément en forme de pavé 12.

La fabrication d'un exemple de pièce selon l'invention avec insert comprend ainsi les étapes suivantes :
- on prépare un corps 10 métallique, en alliage de titane par exemple, avec au moins une face plane supérieure ;
- on usine au moins une rainure rectiligne ouverte 10A sur une face 10B, supérieure ou inférieure. Cette opération est relativement simple car on n'à qu'à considérer la profondeur et la largeur de la rainure.
- on met en place dans la rainure l'insert 11 formé d'un faisceau assemblé de fibres rectilignes enduites.
- on met en place l'élément en forme de pavé 12. Les dimensions de l'élément en forme de pavé et de la rainure sont déterminées de façon à ce que le pavé 12 puisse être placé aisément dans la rainure.

Après avoir mis en place l'élément en forme de pavé 12 sur l'insert qui, comme on le voit sur la figure 4, fait saillie par rapport à la face 10B, et la feuille 14 qui a été conformée avec sa cavité 14' pour venir s'adapter sur l'élément en forme de pavé, on met l'ensemble sous vide.

Le dessus de l'élément en forme de pavé 12 est en saillie par rapport à la surface du corps métallique. On soude la feuille sur tout le pourtour en formant un cordon de soudure 15, pour assurer l'étanchéité et le maintien du vide à l'intérieur de la rainure.

On introduit le conteneur ainsi préparé dans une enceinte permettant de réaliser la compaction isostatique à chaud.

On chauffe l'ensemble et on le soumet à une pression élevée pour compacter le conteneur. Le traitement conduit à une réduction de volume et une densification de l'insert. La partie centrale de l'élément en forme de pavé agit comme un piston et descend dans la rainure. La zone de transition formée par les pans coupés 12A2' et 12A3' permet à l'élément 12 de se déformer sans que les efforts de cisaillement conduisent à une fissuration du pavé.

L'ébauche obtenue est prête pour être usinée.

On obtient après usinage, par exemple, la pièce de la figure 2 dans la mesure où l'on a mis en place le nombre d'inserts correspondant.

On a représenté un mode de réalisation de l'invention avec l'usinage d'une rainure, pour loger un insert rectiligne, qui est fermée longitudinalement. Cependant on ne sort pas du cadre de l'invention en réalisant une ou des rainures débouchant longitudinalement.

En outre l'insert peut avoir toute forme adaptée pour l'application au renforcement interne d'une pièce métallique. La forme peut être oblongue, en forme d'anneau avec deux portions rectilignes reliées par des portions arrondies. L'élément recouvrant l'insert dans la rainure a la même forme que l'insert dans la mesure où il doit venir s'adapter sur l'insert et boucher la rainure.

Le procédé de l'invention permet ainsi de réaliser toute pièce de forme allongée incorporant en particulier un ou plusieurs inserts rectilignes.

## Revendications

1. Procédé de fabrication d'une pièce métallique renforcée de fibres céramiques, selon lequel :
- on usine, dans un corps métallique (10) présentant une face supérieure (10B), au moins un logement (10A) pour un insert,
- on dispose au moins un insert (11) formé des fibres céramiques enduites de métal dans le logement,
- on recouvre l'insert d'un couvercle,
- on met sous vide l'espace interstitiel autour de l'insert et on ferme ledit espace sous vide de manière hermétique,
- on traite l'ensemble du corps métallique avec couvercle par compaction isostatique à chaud et
- on usine ledit ensemble traité pour obtenir ladite pièce, **caractérisé par le fait que** le couvercle comprend un élément (12) recouvrant l'insert (11) dans la rainure et étant en saillie par rapport à la face supérieure, et une feuille (14) recouvrant la face supérieure du corps métallique avec ledit élément (12).

2. Procédé selon la revendication 1 dont l'insert (11) est de forme allongée, et le logement de l'insert dans le corps métallique présente une rainure de forme correspondante.

3. Procédé selon la revendication 1, dont l'insert est de forme rectiligne et l'élément recouvrant l'insert dans la rainure est en forme de pavé.

4. Procédé selon la revendication 3, dont la rainure (10A) présente une première partie (10A1) de logement de l'insert et au moins une deuxième partie (10A2, 10A3) en prolongement de la première partie (10A1), l'élément en forme de pavé (12) comprenant une branche centrale (12A1) recouvrant l'insert et un prolongement (12A2, 12A3) de forme correspondant à la deuxième partie (10A2, 10A3) de la rainure (10A).

5. Procédé selon la revendication précédente dont l'élément en forme de pavé (12) comprend une zone de déformation progressive (12A2', 12A3') entre la branche centrale (12A1) et le prolongement (12A2, 12A3).

6. Procédé selon l'une des revendications précédentes dont l'insert (11) est à section transversale polygonale, notamment rectangulaire, ou bien à section ovale ou circulaire.

7. Procédé selon l'une des revendications précédentes dont l'insert est formé de fibres enduites de métal assemblées en faisceau.

8. Procédé selon l'une des revendications précédentes dont ledit espace est fermé hermétiquement par un cordon de soudure (15) entre la feuille de métal et le corps métallique.

9. Procédé selon l'une des revendications précédentes selon lequel on dispose au moins un deuxième insert dans le corps métallique.

## Patentansprüche

1. Verfahren zur Herstellung eines verstärkten Metallstücks aus keramischen Fasern gemäß dem:
- in einem Metallkörper (10), der eine obere Fläche (10B) aufweist, zumindest eine Aufnahme (10A) für einen Einsatz hergestellt wird,
- mindestens ein Einsatz (11), der aus Keramikfasern gebildet ist, die mit Metall überzogen sind, in der Aufnahme angeordnet wird,
- der Einsatz mit einem Deckel bedeckt wird,
- der interstitielle Raum um den Einsatz herum evakuiert wird, und der Raum unter Vakuum hermetisch geschlossen wird,
- die Anordnung aus dem Metallkörper und dem Deckel durch eine heißisostatische Kompaktierung behandelt wird, und
- die behandelte Anordnung bearbeitet wird, um das Teil zu erhalten,
**dadurch gekennzeichnet, dass** die Abdeckung ein Element (12), das den Einsatz (11) in der Nut abdeckt und in Bezug auf die obere Fläche hervorsteht, und eine Folie (14) umfasst, die die obere Fläche des Metallkörpers mit dem Element (12) bedeckt.

2. Verfahren nach Anspruch 1, wobei der Einsatz (11) eine längliche Form hat, und wobei die Aufnahme des Einsatzes in dem Metallkörper eine Nut mit entsprechender Form aufweist.

3. Verfahren nach Anspruch 1, wobei der Einsatz eine geradlinige Form aufweist, und wobei das Element, das den Einsatz in der Nut abdeckt, die Form eines Blocks hat.

4. Verfahren nach Anspruch 3, wobei die Nut (10A) einen ersten Abschnitt (10A1) zur Aufnahme des Einsatzes und mindestens einen zweiten Abschnitt (10A2, 10A3) als Verlängerung des ersten Abschnitts (10A1) aufweist, wobei das Element in der Form eines Blocks (12) einen zentralen Bereich (12A1) umfasst, der den Einsatz und eine Verlängerung (12A2, 12A3) der Form abdeckt, die dem zweiten Abschnitt (10A2, 10A3) der Nut (10A) entspricht.

5. Verfahren nach dem vorhergehenden Anspruch, wobei das Element in der Form eines Blocks (12) eine Zone der progressiven Verformung (12A2', 12A3') zwischen dem zentralen Bereich (12A1) und der Verlängerung (12A2, 12A3) aufweist.

6. Verfahren nach einem der vorhergehenden Ansprüche, wobei der Einsatz (11) einen polygonalen Querschnitt, insbesondere rechteckigen, oder aber ovalen oder kreisförmigen Querschnitt aufweist.

7. Verfahren nach einem der vorhergehenden Ansprüche, wobei der Einsatz aus Fasern gebildet wird, die mit Metall überzogen sind und als Bündel angeordnet sind.

8. Verfahren nach einem der vorhergehenden Ansprüche, wobei der Raum durch eine Schweißnaht (15) zwischen der Metallfolie und dem Metallkörper hermetisch verschlossen ist.

9. Verfahren nach einem der vorhergehenden Ansprüche, wobei mindestens ein zweiter Einsatz in dem Metallkörper angeordnet wird.

## Claims

1. Method for producing a metallic part reinforced with ceramic fibres, according to which:
- at least one housing (10A) for an insert is machined in a metallic body (10) having an upper face (10B),
- at least one insert (11) formed from metal-coated ceramic fibres is arranged in the housing,
- the insert is covered with a cover,
- the interstitial space around the insert is subjected to a vacuum and the said vacuum space is closed in an airtight manner,
- the whole arrangement of the metallic body and cover is subjected to hot isostatic compaction, and
- the whole treated arrangement is machined in order to obtain the said part, **characterised in that** the cover comprises an element (12) covering the insert (11) in the groove and projecting with respect to the upper face, and a foil (14) covering the upper face of the metallic body with the said element (12).

2. Method according to claim 1, wherein the insert (11) is of elongated shape, and the housing of the insert in the metallic body has a groove of corresponding shape.

3. Method according to claim 1, wherein the insert is of rectilinear shape and the element covering the insert in the groove is block-shaped.

4. Method according to claim 3, wherein the groove (10A) has a first housing part (10A1) of the insert and at least one second part (10A2, 10A3) as an extension of the first part (10A1), the block-shaped element (12) comprising a central section (12A1) covering the insert and an extension (12A2, 12A3) of shape corresponding to the second part (10A2, 10A3) of the groove (10A).

5. Method according to the preceding claim, wherein the block-shaped element (12) comprises a zone of progressive deformation (12A2', 12A3') between the central section (12A1) and the extension (12A2, 12A3).

6. Method according to any one of the preceding claims, wherein the insert (11) has a polygonal, in particular rectangular, transverse cross-section or also an oval or circular cross-section.

7. Method according to any one of the preceding claims, wherein the insert is formed from metal-coated fibres assembled to form a bundle.

8. Method according to any one of the preceding claims, wherein the said space is hermetically sealed by a weld bead (15) between the metal foil and the metallic body.

9. Method according to any one of the preceding claims, according to which at least one second insert is arranged in the metallic body.
